(19) 

Europäisches
Patentamt
European
Patent Office
Office européen
des brevets

(11) **EP 2 172 520 A1**

(12) **EUROPEAN PATENT APPLICATION**

(43) Date of publication:
**07.04.2010 Bulletin 2010/14**

(51) Int Cl.:
**C08L 67/04** (2006.01)  **C08K 5/10** (2006.01)
**C08K 9/06** (2006.01)

(21) Application number: **09154959.2**

(22) Date of filing: **13.10.2004**

(84) Designated Contracting States:
**AT BE BG CH CY CZ DE DK EE ES FI FR GB GR HU IE IT LI LU MC NL PL PT RO SE SI SK TR**

(30) Priority: **14.10.2003 JP 2003353128**
**15.10.2003 JP 2003355568**

(62) Document number(s) of the earlier application(s) in accordance with Art. 76 EPC:
**04792308.1 / 1 674 527**

(27) Previously filed application:
**13.10.2004 PCT/JP2004/015067**

(71) Applicants:
• **Mitsubishi Plastics, Inc.**
**Tokyo 100-0005 (JP)**
• **Sony Corporation**
**Tokyo 141-0001 (JP)**

(72) Inventors:
• **Tanaka, Kazuya**
**Nagahama-shi, Shiga 526-8660 (JP)**

• **Takagi, Jun**
**Nagahama-shi, Shiga 526-8660 (JP)**
• **Kato, Yukio**
**Hiratsuka-shi, Kanagawa 254-8614 (JP)**
• **Yamada, Shinichiro**
**Tokyo Tokyo 141-0001 (JP)**
• **Mori, Hiroyuki**
**Tokyo 141-0001 (JP)**
• **Fujihira, Yuko**
**Tokyo 141-0001 (JP)**

(74) Representative: **Gille Hrabal Struck Neidlein Prop Roos**
**Patentanwälte**
**Brucknerstrasse 20**
**40593 Düsseldorf (DE)**

Remarks:
This application was filed on 12-03-2009 as a divisional application to the application mentioned under INID code 62.

(54) **Flame-retardant injection-molded object**

(57) To provide a flame retardant injection molded article that not only has flame-retardant properties but also combines impact resistance and heat resistance, a flame retardant injection molded article is formed from a resin composition comprising, in addition to the component (A) and component (B), either or both of an aliphatic polyester other than lactic acid resin and an aromatic aliphatic polyester (D), and an ester compound (E) of molecular weight in the range of 200 to 2,000, respectively at prescribed proportions.

EP 2 172 520 A1

**Description**

TECHNICAL FIELD

The present invention relates to an injection molded article comprising a lactic acid resin as the main component, and specifically, to an injection molded article having flame-retardant properties.

BACKGROUND ART

Plastic has infiltrated many areas of life and industry, the world wide production thereof having reached approximately one hundred million tons annually. However, the majority thereof is discarded after use, and this has been identified as one cause that disturbs the global environment. Therefore, effective use of depletable resources has become regarded as important in recent years important, and utilization of renewable resources has become an important topic.

Currently, utilization of plastics from plant source materials (biodegradable) is drawing attention as one resolution means thereof. Plastics from plant source materials not only allow non-depletable resources to be used and depletable resources to be saved during plastic manufacturing, it also has excellent recyclability. Among these, lactic acid resins are materials that are of particular interest as materials of substitution for polystyrene and polyethylene terephthalate in the field of injection molding, such as home appliances, office equipment, and automotive parts, since they can be mass produced through chemical engineering with lactic acid resin obtained from fermentation of the starch as the source materials; furthermore, they exhibit excellent transparency, rigidity, and heat resistance.

Applications for home appliances, office equipment, automotive parts, and the like require a flame retardant for fire prevention, and since lactic acid resins are resins that are as easily combustible as polystyrene, ABS, and the like, it is necessary to enforce flame retarding measures, such as combining a flame retardant, when using in these applications.

Conventionally, flame retarding measures combining halogen flame retardants, in particular, bromine flame retardants, were often adopted for polystyrene, ABS, and the like; however, when halogen flame retardants are combined, there is the risk that toxic gases, such as dioxins, will be generated at combustion time, posing problems from the perspective of safety during waste incineration and thermal recycling.

From such points of view, "metal hydroxides" are drawing attention as a flame retardant that is environment friendly and does not generate decomposition gas.

For instance, a method is disclosed in Japanese Patent Application Laid-Open No. H8-252823 and the like, wherein flame-retardant properties are provided by combining 30% to 50 wt% aluminum hydroxide or magnesium hydroxide with a pellet comprising biodegradable plastic source materials.

However, it has become clear that if a metal hydroxide is combined as a flame retardant with a biodegradable plastic, the metal hydroxide becomes a starting point for breakage, lowering the impact resistance.

Japanese Patent Application Laid-Open No. 2003-192925 and Japanese Patent Application Laid-Open No. 2003-192929 disclose a technique whereby flame-retardant properties are provided by combining a flame retardant additive agent to a biodegradable macromolecular organic compound. However, the impact resistance not being sufficient, the technique was insufficient for an enforceable technology.

Japanese Patent Application Laid-Open No. 2003-213149 discloses a flame retardant biodegradable resin composition comprising a biodegradable flame retardant and a biodegradable macromolecular organic compound. However, the flame-retardant property of the resin composition provided by such an invention would fulfill the HB rating according to the UL94 criteria; thus, the flame retardant property was insufficient for broad use in home appliances, automotive applications, and the like.

In addition, Japanese Patent Application Laid-Open No. 2003-192921 discloses a technique, wherein at least one species of nucleic acid-related substances selected from the group consisting of a nucleobase, a nucleoside, a nucleotide, and a polynucleotide is combined as a flame retardant. However, there is no statement on the impact resistance, and the technique was not sufficient for using materials having polylactic acid, which has poor impact resistance, as main source materials in applications such as home appliances and automobiles.

In regard to improvement of impact resistance, for instance, Japanese Patent Application Laid-Open No. H10-87976 discloses means that combine polybutylene succinate, polybutylene succinate/adipate copolymer, and the like as aliphatic polyester other than lactic acid resin; however, it has become clear that to improve impact resistance in a system that combines a metal hydroxide, these aliphatic polyesters need to be combined in large quantities, to which occurrence of softening (decrease in elasticity) and a decrease in heat resistance of the injection molded article are attributed, such that these aliphatic polyesters are not only difficult to employ in applications that require heat resistance, but also become the source of combustion, decreasing flame-retardant properties.

Otherwise, Japanese Patent Application Laid-Open No. H11-116784 proposes a method whereby impact resistance is improved by the addition of an impact-resistance-improving agent to polylactic acid and crystallization. However, a problem existed, as the impact-resistance-improving agent acted as a plasticizer, decreasing the heat resistance of the injection molded article.

## DISCLOSURE OF THE INVENTION

Problems to Be Solved by the Invention

The present invention provides a flame retardant injection molded article that not only has flame-retardant properties, but also combines impact resistance and heat resistance. In other words, a flame retardant injection molded article whose impact resistance has been increased without softening is provided.

Means to Solve the Problems

The present invention proposes a flame retardant injection molded article formed from a resin composition comprising a lactic acid resin (A) and a metal hydroxide (B) whose surface has been treated with a silane coupling agent, the proportion in the resin composition occupied by the component (B) being 15% to 40% in mass, the Izod impact strength being not less than 5 kJ/$m^2$ according to JIS K 7110, and the deflection temperature under load being not less than 50°C according to JIS K 7191, and the flame-retardant rating being not less than V-2 according to UL94 vertical firing test.

JIS K 7110 and JIS K 7191 are classifications according to the Japanese Industry Standard, and as the testing conditions defined by JIS K 7110 are the same as the testing conditions defined by ASTM D256, in addition, as the testing conditions defined by JIS K 7191 are the same as the testing conditions defined by ASTM D648, they can be respectively switched to the ASTM standards for reading.

The present invention proposes, as an embodiment of a flame retardant injection molded article that is a flame retardant injection molded article formed from a resin composition comprising the lactic acid resin (A) (component (A)) and the metal hydroxide (B) (component (B)), and whose Izod impact strength (impact resistance), deflection temperature under load (heat resistance), and flame-retardant properties fulfill the above-mentioned criteria, a flame retardant injection molded article that is a flame retardant injection molded article formed from a resin composition comprising, together with the component (A) and the component (B), a copolymer (C) of lactic acid resin and diol/dicarboxylic acid, the proportion in the resin composition occupied by the component (C) being 10% to 40% in mass. In addition, the present invention proposes, as another embodiment, a flame retardant injection molded article that is a flame retardant injection molded article formed from a resin composition comprising, together with the component (A) and the component (B), either or both of an aliphatic polyester other than lactic acid resin and an aromatic aliphatic polyester (D), and an ester compound (E) of molecular weight in the range of 200 to 2,000, the proportion in the resin composition occupied by the component (D) being 5% to 25% in mass, and the proportion in the resin composition occupied by the component (E) being 0.1% to 5% in mass.

The upper limit values and the lower limit values of the numerical ranges in the present invention contain the intent that a case falling slightly outside a numerical range specified by the present invention is included within the scope of the present invention, as long as the effect of an action is the same as when within the numerical value range in question.

## BEST MODE FOR CARRYING OUT THE INVENTION

Embodiments of the present invention will be described in the following; however, these are examples of the present invention, and the scope of the present invention is not limited to the embodiments described below.

(First Embodiment)

The flame retardant injection molded article related to the First Embodiment of the present invention is a flame retardant injection molded article that is formed from a resin composition comprising a lactic acid resin (A), a metal hydroxide (B) whose surface has been treated with a silane coupling agent, and a copolymer (C) of lactic acid resin and diol/dicarboxylic acid.

(Lactic acid resin (A))

For the lactic acid resin used in the present embodiment, poly(L-lactic acid) having L-lactic acid as the structural unit, poly(D-lactic acid) having D-lactic acid as the structural unit, or poly(DL-lactic acid) having L-lactic acid and D-lactic acid as the structural units, or a mixture comprising the combination of two or more species thereof can be used.

The DL constitution ratio of the lactic acid resin used in the present embodiment is preferably L isomer:D isomer=100:0 to 90:10 or L isomer:D isomer=0:100 to 10:90, more preferably L isomer:D isomer=99.5:0.5 to 94:6 or L isomer:D isomer=0.5:99.5 to 6:94. Within such limits, heat resistance is easily obtained, and an injection molded article that can be used in a wide range of applications can be obtained.

In addition, the lactic acid resin used in the present embodiment may be a copolymer of lactic acid and α-hydroxycarboxylic acid, aliphatic diol, or aliphatic dicarboxylic acid.

In so doing, examples of said "$\alpha$-hydroxycarboxylic acids" that are copolymerized in the lactic acid resin include optical isomers of lactic acid (D-lactic acid with respect to L-lactic acid, and L-lactic acid with respect to D-lactic acid), glycolic acid, bifunctional aliphatic hydroxycarboxylic acids, such as 3-hydroxybutyric acid, 4-hydroxybutyric acid, 2-hydroxy-n-butyric acid, 2-hydroxy-3,3-dimethyl butyric acid, 2-hydroxy-3-methyl butyric acid, 2-methyl lactic acid, and 2-hydroxycaproic acid, lactones, such as caprolactone, butyrolactone, and valerolactone, and examples of said "aliphatic diol" that are copolymerized in the lactic acid resin include ethylene glycol, 1,4-butanediol, 1,4-cyclohexane dimethanol, and the like, and examples of said "aliphatic dicarboxylic acids" include succinic acid, adipic acid, suberic acid, sebacic acid, dodecane diacid, and the like.

Condensation polymerization, ring-opening polymerization, and other well-known polymerization methods can be adopted as the method for polymerizing lactic acid resin. For instance, in condensation polymerization, a lactic acid resin having any composition can be obtained by directly dehydrating, condensing, and polymerizing L-lactic acid or D-lactic acid or a mixture thereof.

In addition, in ring-opening polymerization, polylactic acid polymers can be obtained from lactide, which is a cyclic dimer of lactic acid, using a chosen catalyst, while using a polymerization regulator and the like as necessary. In so doing, L-lactide, which is a dimer of L-lactic acid, D-lactide, which is a dimer of D-lactic acid, or DL-lactide, which comprises L-lactic acid and D-lactic acid can be used as lactide, and a lactic acid resin with desired composition and crystallinity can be obtained by mixing and polymerizing these as necessary.

A non-aliphatic dicarboxylic acid, such as terephthalic acid, and a non-aliphatic diol, such as bisphenol A-ethylene oxide adduct, may be added as minor copolymerization components to the lactic acid resin used in the present embodiment, as necessary, such as to further increase the heat resistance or the like, within a range where the intrinsic characteristics of the lactic acid resin is not lost, that is, within a range where not less than 90 wt% of lactic acid resin component is contained.

Further, a small amount of chain extender, for instance, diisocyanate compound, epoxy compound, acid anhydride, and the like, may be added with the purpose of increasing the molecular weight.

The preferred range for the average molecular weight of the lactic acid resin used in the present embodiment is between 50,000 and 400,000, and more preferably between 100,000 and 250,000. If the molecular weight is not less than 50,000, excellent practical properties can be expected, and if under 400,000, there is also no problem of molding processability due to too high a molten viscosity.

Representative examples of lactic acid resins include the LACEA series manufactured by Mitsui Chemicals, Inc., the Nature Works series manufactured by Cargill Dow, and the like.

(Metal hydroxide (B))

In the present embodiment, the use of a metal hydroxide (hydrated metallic compound) whose surface has been treated with a silane coupling agent to increase flame-retardant properties is important.

A decrease in the number of components (that is to say, a suppression of decrease in mechanical properties) due to improvement of flame-retardant properties, as well as a suppression of decrease in molecular weight during mixing with the resin and during molding of the injection molded article, can be projected by treating the surface of the hydroxide with a silane coupling agent.

Examples of metal hydroxides include aluminum hydroxide, magnesium hydroxide, calcium aluminate hydrate, tin oxide hydrate, phlogopite, and the like. Among these, aluminum hydroxide is particularly preferred. As aluminum hydroxide gives rise to highly endothermic reactions at lower temperatures in addition to being excellent from the perspective of costs compared to other metal hydroxides, it is a flame retardant that is particularly appropriate for flame retardation of lactic acid resin.

Examples of silane coupling agent species include epoxy silane, vinyl silane, methacrylic silane, amino silane, isocyanate silane, and the like, the use of epoxy silane being particularly preferred from the perspective of dispersibility and effectiveness of providing flame-retardant properties.

As other non-silane coupling agents, for instance, titanate coupling agent, higher fatty acids, and the like, have bad adherence to the resin, exhibiting flame-retardant properties is difficult.

In addition, the average particle size of the metal hydroxide is preferably within a range of 0.1$\mu$m to 5 $\mu$m, and more preferably within a range of 0.5$\mu$m to 3 $\mu$m. Flame retardation can be planned while maintaining the decrease in impact resistance at a minimum by combining a metal hydroxide whose average particle size falls within the range of 0.1$\mu$m to 5 $\mu$m.

In addition, the flame-retardant efficiency can be further increased by combining a flame-retardant aid agent in addition to the above-mentioned hydrated metallic compounds. Concrete examples of flame-retardant aid agents include metallic compounds, such as zinc stannate, zinc borate, iron nitrate, copper nitrate, and metal sulfonate salts, phosphorus compounds, such as red phosphorus, high molecular weight phosphoesters, and phosphazen compounds, nitrogen compounds, such as melamine cyanurate, or silicone compounds, such as dimethyl silicone, phenyl silicone, and fluorine silicone, and the like.

(Copolymer (C))

In the present embodiment, combining a copolymer (C) of lactic acid resin and diol/dicarboxylic acid to increase impact resistance of the injection molded article is important. Impact resistance can be provided without losing flame-retardant properties by combining a copolymer (C) of lactic acid resin and diol/dicarboxylic acid.

For the proportion occupied by the lactic acid resin in the total of the copolymer (C), a lower limit of 10% in mass, in particular, 20% in mass, is more preferred from the perspective of heat resistance, and an upper limit of 80% in mass, in particular, 70% in mass, is more preferred from the perspective of effectiveness of provision of impact resistance.

Examples of copolymer structures include random copolymer, block copolymer, and graft copolymer, either structure being suitable. However, block copolymer and graft copolymer are preferred, in particular, from the perspective of effectiveness of improvement of impact resistance and transparency. Specific examples of random copolymers include the GS-Pla series manufactured by Mitsubishi Chemical Corporation, and specific examples of block copolymers or graft copolymers include the Plamate series manufactured by Dai Nippon Ink and Chemicals Incorporated.

There is no particular limitation on the manufacturing method thereof, and examples include methods wherein a polyester having a structure resulting from dehydration and condensation of diol and dicarboxylic acid, or a polyether polyol, is subjected to ring-opening polymerization or interesterification reaction with lactide, and methods wherein a polyester having a structure resulting from dehydration and condensation of diol and dicarboxylic acid, or a polyether polyol, is subjected to dehydration/deglycolation condensation or interesterification reaction with lactic acid resin.

There is no particular limitation on the above-mentioned diol component, and examples include linear diols, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol, branched diols, such as propylene glycol, 1,2-butanediol, 1,3-butanediol, 1,2-pentanediol, 1,3-pentanediol, 1,4-pentanediol, 2,3-pentanediol, 2,4-pentanediol, 1,2-hexanediol, 1,3-hexanediol, 1,4-hexanediol, and 1,5-hexanediol, and polyols, such as polyethyleneglycol, polypropyleneglycol, polybutyleneglycol, polytetramethyleneglycol.

There is no particular limitation on the above-mentioned dicarboxylic acid component, and examples include linear dicarboxylic acids, such as succinic acid, adipic acid, suberic acid, azelaic acid, sebacic acid, nonane dicarboxylic acid, decane dicarboxylic acid, maleic acid, fumaric acid, citraconic acid, dodecane dicarboxylic acid, and cyclohexane dicarboxylic acid, branched dicarboxylic acids, such as methyl succinic acid, dimethyl succinic acid, ethyl succinic acid, 2-methyl glutaric acid, 2-ethyl glutaric acid, 3-methyl glutaric acid, 3-ethyl glutaric acid, 2-methyl adipic acid, 2-ethyl adipic acid, 3-methyl adipic acid, 3-ethyl adipic acid, and methyl glutaric acid, and aromatic dicarboxylic acids, such as phthalic acid, isophthalic acid, terephthalic acid, hexahydrophthalic acid, naphthalene dicarboxylic acid, phthalic anhydride, bisphenol A, and biphenol.

In addition, the above-mentioned copolymer (C) can be adjusted to a prescribed molecular weight using isocyanate compound or carboxylic acid anhydride. However, from the perspective of processability and durability, an average molecular weight for the copolymer of lactic acid resin and diol/dicarboxylic acid in the range of 50,000 to 300,000 is preferred, and a range of 100,000 to 250,000 is more preferred.

(Mixing proportions of components (B) and (C))

In regard to the mixing quantities of the above-mentioned components, the proportion occupied by metal hydroxide (B) in the total of lactic acid resin (A), metal hydroxide (B) whose surface was treated by silane coupling, and copolymer (C) is preferably between 10% and 40% in mass, and more preferably between 15% and 35% in mass. If this is below 10% in mass, the effectiveness of the improvement of impact resistance is poor. On the other hand, if this is above 40% in mass, softening of the molded article may occur, losing heat resistance.

Meanwhile, the proportion occupied by copolymer (C) in the total of lactic acid resin (A), metal hydroxide (B) whose surface was treated by silane coupling, and copolymer (C) is preferably between 15% and 40% in mass, and more preferably between 20% and 30% in mass. If this is below 15% in mass, sufficient flame-retardant properties cannot be conferred. On the other hand, if this is above 40% in mass, a notable decrease in mechanical strength may occur.

(Other mixing components)

A carbodiimide compound may be combined in addition to the above mentioned component (A), component (B), and component (C) in order to confer hydrolysis resistance to the injection molded article of the present embodiment. As for the mixing quantity of carbodiimide compound, mixing of 0.1 to 10 mass parts, in particular, 1 to 5 mass parts of carbodiimide compound with respect to 100 mass parts of the resin composition forming the injection molded article of the present embodiment is preferred. If this is below 0.1 mass parts, there is a case hydrolysis resistance cannot be conferred. In addition, if this is above 10 mass parts, softening of the injection molded article may occur, losing heat resistance.

It is preferred to mix an aromatic carbodiimide compound as the carbodiimide compound to be added. Although the effectiveness of conferring hydrolysis resistance is sufficient with an aliphatic carbodiimide compound, a hydrolysis resistance can be conferred more effectively with an aromatic carbodiimide.

The carbodiimide compounds may be those having the basic structure given in the following general formula.

$$-(N=C=N-R-)n-$$

(In the above-mentioned formula, n represents an integer that is 1 or greater. R represents other organic bond units. The R portion of these carbodiimide compounds may be any of aliphatics, alicyclics, and aromatics.)

In general, n is suitably defined between 1 and 50.

Specifically, examples include, for instance, bis(dipropylphenyl)carbodiimide, poly(4,4'-diphenylmethane carbodiimide), poly(p-phenylene carbodiimide), poly(m-phenylene carbodiimide), poly(tolyl carbodiimide), poly(diisopropylphenylene carbodiimide), poly(methyl-diisopropylphenylene carbodiimide), poly(triisopropylphenylene carbodiimide), and the like, and monomers thereof. For the carbodiimide compound, any thereof can be used either alone or by combining two or more species.

In addition, additives, such as heat stabilizer, antioxidant, UV absorbent, light stabilizer, pigment, and dye, can be prescribed within a range where the effect of the present embodiment is not lost.

(Manufacturing method)

Next, a method for molding the injection molded article of the present embodiment will be described.

The lactic acid resin, the metal hydroxide whose surface has been treated with a silane coupling agent, the copolymer of lactic acid resin and diol/dicarboxylic acid, other additives, and the like can be mixed by introducing the respective source materials into the same injection-molding machine. A method whereby the source materials are directly mixed using an injection-molding machine to perform injection molding, or a method wherein dry blended source materials are extruded into a strand shape using a biaxial extrusion machine to fabricate pellets, then the injection-molding machine is reused to fabricate an injection molded article, is available.

In either method, it is necessary to consider the decrease in molecular weight due to degradation of the source materials. However, it is preferable to select the latter in order to mix homogeneously. In the present embodiment, for instance, lactic acid resin, metal hydroxide whose surface has been treated with a silane coupling agent, copolymer of lactic acid resin and diol/dicarboxylic acid, and other additives are thoroughly dried to eliminate moisture, then melt-mixed using a biaxial extrusion machine and extruded into a strand shape to fabricate a pellet. It is preferred that the melt extrusion temperature be suitably selected, taking into consideration that the melting point of the lactic acid resin varies according to the composition ratio of the L-lactic acid structure and the D-lactic acid structure, the melting point of the mixed resin varies according to the mixing proportion of the copolymer of lactic acid resin and diol/dicarboxylic acid and the lactic acid resin, and the like. In general, an actual temperature range of 160°C to 230°C is selected.

After thoroughly drying the pellet fabricated by the above-mentioned method to eliminate moisture, injection molding is carried out according to the following method.

There is no particular limitation on the injection molded article of the present embodiment, which can be obtained by injection molding methods, such as, representatively, general injection molding method for thermoplastic resin, gas assist molding method, and injection compression molding method.

In addition to the methods mentioned above, In-Mold method, gas press molding method, two-color molding method, sandwich molding method, PUSH-PULL, SCORIM, and the like can also be adopted according to other purposes.

The injection molding device is constructed from a general injection-molding machine, a gas assist molding machine, an injection compression molding machine, and the like, and a molding die and auxiliary instruments, a mold temperature regulator and a source materials drier, and the like that are used therefor. For molding conditions, it is preferred to carry out molding with a molten resin temperature in the range of 170°C to 210°C to avoid thermal decomposition of the resin inside the injection cylinder.

If the injection molded article is to be obtained in a non-crystalline state, it is preferred that the mold temperature be as low a temperature as possible from the perspective of shortening the cooling time in the molding cycle (mold closing, injection, packing-holding, cooling, mold opening, and release). In general, 15°C to 55°C is desirable, as well as the use of a chiller. However, a high temperature within this range is advantageous from the perspective of preventing contraction, warp, and deformation of the molded article.

In addition, it is effective to carry out crystallization in the mold at molding time, or after release from the mold, to confer additional heat resistance to the molded article that is obtained by injection molding.

From the perspective of productivity, in case the crystallization speed of the resin that forms the injection molded article is slow, it is preferred to carry out crystallization after release from the mold, and if the crystallization speed is rapid, it is preferred to carry out crystallization inside the mold.

If crystallization is to be carried out inside the mold, the interior of a heated mold is filled with molten resin, which is then held inside the mold for a given time period. The mold temperature is from 80°C to 130°C, and preferably from 90°C to 120°C; the cooling time is from 1 to 300 seconds, and preferably from 5 to 30 seconds. The heat resistance of the injection molded article according to the present embodiment can be further increased by carrying out crystallization inside the mold with such temperature and cooling time.

In addition, if crystallization is to be carried out after releasing the molded article from the mold, the heating temperature is preferably in the range of 60°C to 130°C, and more preferably in the range of 70°C to 90°C. In case the heating temperature is lower than 60°C, crystallization does not proceed in the molding process; in case it is greater than 130°C, deformation and contraction occur during cooling of the molded article. The heating time can be suitably determined according to the composition and heating temperature; for instance, at 70°C, heating is carried out for 15 minutes to 5 hours. In addition, at 130°C, heating is carried out for 10 seconds to 30 minutes.

Examples of crystallization methods include methods wherein injection molding is carried out in a mold whose temperature was raised previously, and crystallization is carried out inside the mold; methods wherein the temperature of the mold is raised after injection molding to carry out crystallization inside the mold; or methods wherein, after releasing the injection molded article in a non-crystalline state, crystallization is carried out with hot air, vapor, hot water, a far-infrared radiation heater, an IH heater, and the like. In so doing, the injection molded article need not be immobilized; however, to prevent deformation of the molded article, it is preferred to immobilize the article with a metal mold, a resin mold, and the like. In addition, taking productivity into consideration, heating can also be carried out in a packaged state.

A crystallization promoting agent can be combined to shorten the crystallization time. Concrete examples of the crystallization promoting agents include inorganic crystallization promoting agents, such as talc, kaolin, calcium carbonate, bentnite, mica, sericite, glass flake, graphite, magnesium hydroxide, aluminum hydroxide, antimony trioxide, barium sulfate, zinc borate, hydrous calcium borate, alumina, magnesia, wollastonite, xonotlite, sepiolite, whisker, glass fiber, glass flake, metallic powder, beads, silica balloon, and shirasu balloon, or organic crystallization accelerating agents, such as sorbitol derivatives, olefin waxes, benzoate, and glycerin. In addition, inorganic crystallization promoting agents and organic crystallization promoting agents can also be used in combination.

As for the mixing quantity of the crystallization promoting agent, mixing 0.1 to 5 mass parts with respect to 100 mass parts of the resin composition forming the injection molded article according to the present embodiment is preferred, and mixing 0.5 to 3 mass parts is even more preferred. The effect of accelerating the crystallization speed can be conferred without losing impact resistance by mixing a crystallization promoting agent within such a range. In this way, a rapid crystallization inside the mold becomes possible, and an injection molded article having excellent heat resistance can be molded without elongating the molding cycle. In addition, the heat application time can be greatly shortened also when crystallization is to be carried out outside of the mold.

(Second Embodiment)

The flame retardant injection molded article according to the Second Embodiment of the present invention is a flame retardant injection molded article that is formed from a resin composition comprising alternatively to component (C) in the First Embodiment, either or both of an aliphatic polyester other than lactic acid resin and an aromatic aliphatic polyester (D), and an ester compound (E) of molecular weight in the range of 200 to 2,000. That is to say, it is a flame retardant injection molded article that is formed from a resin composition comprising a lactic acid resin (A), a metal hydroxide (B) whose surface has been treated with a silane coupling agent, a biodegradable polyester resin (D) other than a lactic acid resin, and an ester compound (E).

When a metal hydroxide is mixed in an injection molded article, although flame-retardant properties increase, the metal hydroxide becomes the starting point for breakage, lowering impact resistance. However, the heat resistance can be maintained while avoiding the decrease in impact resistance by mixing together an ester compound (E) of 200 to 2,000 molecular weight. In other words, the impact resistance can be raised without softening the injection molded article. The probable reason this effect is obtained is believed to be the accumulation of the ester compound (E) around the metal hydroxide (B) (in the vicinity of the boundary surface), and while it locally becomes resilient, the injection molded article overall does not become soft, maintaining heat resistance.

It has been determined that if an aliphatic polyester and/or an aromatic aliphatic polyester (D) other than lactic acid resin is not mixed, for unknown reasons, an effect that is as large as described above cannot be obtained.

The lactic acid resin (A) and the metal hydroxide (B) used in the present embodiment are identical to those used in the First Embodiment.

A design wherein the mixing quantity of metal hydroxide (B) is such that it amounts to 15% to 40% with respect to the total mass of the components (A), (B), (D), and (E), and, in particular, 20% to 25% is preferred. If within the range of 15% to 40%, sufficient flame-retardant properties can be conferred; and furthermore, mechanical properties do not decrease remarkably.

(Biodegradable polyester resin (D))

In the present embodiment, mixing (polymer blending) of a biodegradable polyester other than lactic acid resin with the lactic acid resin (A) is important. Results have been obtained showing that with lactic acid resin (A) alone, a sufficient effect cannot be obtained, even when a metal hydroxide (B) and an ester compound (E) are mixed.

Examples of biodegradable polyesters other than lactic acid resin include biodegradable aliphatic polyesters and biodegradable aromatic aliphatic polyesters other than lactic acid resin.

[Biodegradable aliphatic polyesters]

Example of the above mentioned biodegradable aliphatic polyesters other than lactic acid resin include, for instance, aliphatic polyesters obtained by condensation of an aliphatic diol and an aliphatic dicarboxylic acid, aliphatic polyesters obtained by ring-opening polymerization of cyclic lactones, synthetic aliphatic polyesters, and the like.

An aliphatic polyester obtained by condensation polymerization of any of ethylene glycol, propylene glycol, 1,4-butanediol, and 1,4-cyclohexanedimethanol, which are aliphatic diols, or a mixture comprising a combination of at least two species thereof, and any of succinic acid, adipic acid, suberic acid, sebacic acid, dodecane diacid, and the like, which are aliphatic dicarboxylic acids, or a mixture comprising a combination of at least two species thereof, can be used as the "aliphatic polyester obtained by condensation of an aliphatic diol and an aliphatic dicarboxylic acid." Polymers obtained by increasing molecular weight with an isocyanate compound and the like as necessary can also be used.

The average molecular weight of this aliphatic polyester is in the range of preferably 50,000 to 400,000, and more preferably of 100,000 to 250,000.

Concrete examples include the Bionolle series manufactured by Showa Highpolymer Co., Ltd., EnPol manufactured by IRe Chemical, and the like.

A copolymer obtained by interesterification between the above-mentioned aliphatic polyester, that is to say an aliphatic polyester obtained by condensation of the above-mentioned aliphatic diol and aliphatic dicarboxylic acid, and a lactic acid resin can also be used. A copolymer obtained in this way can also be adjusted to a given molecular weight by using an isocyanate compound or a carboxylic acid anhydride.

Any from ε-caprolactone, δ-valerolactone, β-methyl-δ-valerolactone, and the like, which are cyclic monomers, or a component comprising a combination of at least two among these that has been polymerized, can be used as the "aliphatic polyesters obtained by ring-opening polymerization of cyclic lactones."

The average molecular weight of this aliphatic polyester ranges preferably from 50,000 to 400,000, and more preferably from 100,000 to 250,000.

Concrete examples include the Celgreen series manufactured by Daicel Chemical Industries.

A copolymer of a cyclic acid anhydride and oxiranes, for instance, succinic anhydride and ethylene oxide or propylene oxide, etc., and the like can be used as the "synthetic aliphatic polyester."

The average molecular weight of this aliphatic polyester ranges preferably from 50,000 to 400,000, and more preferably from 100,000 to 250,000.

[Biodegradable aromatic aliphatic polyesters]

Examples of the above mentioned biodegradable aromatic aliphatic polyesters include biodegradable aromatic aliphatic polyesters comprising an aromatic dicarboxylic acid component, an aliphatic dicarboxylic acid component, and an aliphatic diol component.

Examples of the aromatic dicarboxylic acid components include, for instance, isophthalic acid, terephthalic acid, 2,6-naphthalene dicarboxylic acid, and the like; examples of the aliphatic dicarboxylic acid components include, for instance, succinic acid, adipic acid, suberic acid, sebacic acid, dodecane diacid, and the like; and examples of the aliphatic diol components include, for instance, ethyleneglycol, 1,4-butanediol, 1,4-cyclohexanedimethanol, and the like.

The most adequately usable among the above is terephthalic acid as the aromatic dicarboxylic acid component, adipic acid as the aliphatic dicarboxylic acid component, and 1,4-butanediol as the aliphatic diol component.

Two or more species of aromatic dicarboxylic acid components, aliphatic dicarboxylic acid components, and aliphatic diol components can be used respectively.

Representative examples of aromatic aliphatic polyesters include copolymer of polybutylene adipate and terephthalate (Ecoflex manufactured by BASF) and copolymer of tetramethylene adipate and terephthalate (EastarBio manufactured by Eastman Chemicals), and the like.

From the perspective of the effect of improvement of impact resistance, it is preferred that the glass transition temperature (Tg) of the aliphatic polyesters and the aromatic aliphatic polyesters both be 0°C or lower.

A design wherein the mixing quantity of the biodegradable polyester resin (D) occupies 5% to 25% of the total mass of the components (A), (B), (D), and (E), and, in particular, 10% to 20% is preferred. If within the range of 5% to 25%, an effect of improvement of impact resistance can be obtained; and furthermore, decrease in elasticity and decrease in heat resistance due to softening do not occur.

(Ester compound (E))

In the present embodiment, mixing of an ester compound (E) with a molecular weight of 200 to 2,000 to improve impact resistance of the injection molded article is important.

Examples of ester compounds to be used in the present embodiment include diisodecyladipate, di(2-ethylhexyl) azelate, di(2-ethylhexyl)sebacate, di(2-ethylhexyl)dodecanedionate, acetyltributylcitrate, dibutylsebacate, di(2-ethylhexyl)adipate, diisononyladipate, dimethyl adipate, dibutyladipate, tributylcitrate, acetyltributylcitrate, triethylcitrate, diisobutyladipate, di(2-ethylhexyl)dodecanedionate, dibutylphthalate, diisononylphthalate, 2-ethylhexyl benzylicphthalate, dimethylphthalate, diheptylphthalate, diisodecylphthalate, di(2-ethylhexyl)phthalate, tris-(2-ethylhexyl)trimellitate, tributyl trimellitate, tri(2-ethylhexyl)trimellitate, glycerin triacetate, polyethyleneglycol, and the like. Among these, diisodecyladipate, di(2-ethylhexyl)adipate, and di(2-ethylhexyl)azelate are preferred.

It is important that the molecular weight of the ester compound is within a range of 200 to 2,000, and a range of 250 to 1,000 is preferred. If the molecular weight is lower than 200, not only does obtaining the effect of improvement of impact resistance become difficult, but there is also the risk that a bleed-out of the ester compound to the surface of the molded article will occur. On the other hand, if 2,000 is exceeded, and high molecular weight is reached, not only does obtaining the effect of improvement of impact resistance become difficult, but the impact resistance of the molded article decreases as well.

A design wherein the mixing quantity of ester compound (E) is such that it amounts to 0.1 % to 5% with respect to the total mass of the components (A), (B), (D), and (E), in particular, 0.5% to 3% is preferred. If within the range of 0.1% to 5%, an effect of improvement of impact resistance can be obtained; and furthermore, decrease in heat resistance does not occur. If the mixing quantity of ester compound becomes too large, as the ester compound plasticizes the resin component, a decrease in heat resistance occurs.

(Other components)

In the injection molded article of the present embodiment, a crystallization promoting agent may be further mixed in addition to the components (A), (B), (D), and (E) to further increase heat resistance. Since crystallization speed is extremely slow for a resin composition having lactic acid resin as the main component, it is preferred to accelerate crystallization by mixing a crystallization promoting agent.

However, a crystallization promoting agent need not be combined.

Examples of crystallization promoting agents include any of talc, kaolin, calcium carbonate, bentnite, mica, sericite, glass flake, graphite, magnesium hydroxide, aluminum hydroxide, antimony trioxide, barium sulfate, zinc borate, hydrous calcium borate, alumina, magnesia, wollastonite, xonotlite, sepiolite, whisker, glass fiber, glass flake, metallic powder, beads, silica balloon, and shirasu balloon and the like, or a mixture comprising the combination of at least two species thereof.

In addition, the effects of the inorganic crystallization promoting agent can also be increased, by treating the surface of the above-mentioned inorganic crystallization promoting agents with titanic acid, fatty acid, silane coupling agent, and the like to increase adherence to the resin.

It is preferred that the mixing quantity of the crystallization promoting agent be 0.1 to 10 mass parts with respect to 100 mass parts total of the components (A), (B), (D), and (E), and, in particular, 1 to 5 mass parts. If within the range of 0.1 to 10 mass parts, an effect of acceleration of crystallization speed can be conferred without losing impact resistance. In this way, a rapid crystallization inside the mold becomes possible, and an injection molded article having excellent heat resistance can be molded without elongating the molding cycle.

If crystallization is to be carried out by mixing a crystallization promoting agent, it is preferred to carry out crystallization during injection molding. Specifically, it is preferred that this crystallization be carried out inside the mold during injection molding, under the conditions of a mold temperature of 80°C to 130°C and a cooling time of 1 to 300 seconds.

Carbodiimide compound may be mixed to the components (A), (B), (D), and (E) as in the First Embodiment to confer hydrolysis resistance also to the injection molded article of the present embodiment. The species and mixing quantity of carbodiimide compound are the same as in the First Embodiment. However, it need not be mixed.

In addition, additives, such as heat stabilizer, antioxidant agent, UV absorbent, light stabilizer, lubricant, pigment, dye, and plasticizer, can further be prescribed within ranges where the effects of the present embodiment are not lost.

(Manufacturing method)

Next, the method for molding the injection molded article of the present embodiment will be described.

First, respectively prescribed quantities of lactic acid resin, biodegradable polyester other than lactic acid resin, metal hydroxide, ester compound, and, as necessary, crystallization promoting agent, carbodiimide, and other additives are mixed by introducing the respective source materials into the same injection-molding machine. Concretely, a method whereby the source materials are directly mixed using an injection-molding machine to perform injection molding, or a method wherein dry blended source materials are extruded into a strand shape using a biaxial extrusion machine to fabricate pellets, then the injection-molding machine is reused to fabricate an injection molded article, can be adopted. In either method, it is necessary to consider the decrease in molecular weight due to degradation of the source materials, and it is preferable to select the latter in order to mix homogeneously.

For instance it suffices that a lactic acid resin, a biodegradable polyester other than lactic acid resin, a metal hydroxide, an ester compound, and, as necessary, a crystallization promoting agent, carbodiimide, and other additives are dried thoroughly to eliminate moisture, then melt-mixed using a biaxial extrusion machine and extruded into a strand shape to fabricate a pellet.

In so doing, in regard to the melt extrusion temperature, a suitable setting taking into consideration that the melting point of the lactic acid resin varies according to the composition ratio of the L-lactic acid structure and the D-lactic acid structure, the melting point of the mixed resin varies according to the mixing proportion of the aromatic aliphatic polyesters, and the like is preferred. In general, an actual temperature range of 160°C to 230°C is selected.

After thoroughly drying the pellet fabricated by the above-mentioned method to eliminate moisture, injection molding is carried out according to the following method.

That is to say, there is no particular limitation on the injection molding method, and it suffices that injection molding methods, such as, representatively, general injection molding method for thermoplastic resin, gas assist molding method, and injection compression molding method, be adopted. In addition to the methods mentioned above, In-Mold method, gas press molding method, two-color molding method, sandwich molding method, PUSH-PULL, SCORIM, and the like can also be adopted according to other purposes.

The injection molding device is constructed from a general injection-molding machine, a gas assist molding machine, an injection compression molding machine, and the like, and a molding die and auxiliary instruments, a mold temperature regulator and a source materials drier, and the like that are used therefor; however, it is not limited to such constructions.

For molding conditions, it is preferred to carry out molding with a molten resin temperature in the range of 170°C to 210°C to avoid thermal decomposition of the resin inside the injection cylinder.

If the injection molded article is to be obtained in a non-crystalline state, it is preferred that the mold temperature be as low a temperature as possible from the perspective of shortening the cooling time in the molding cycle (mold closing, injection, packing-holding, cooling, mold opening, and release). In general, 15°C to 55°C is desirable, as well as the use of a chiller. However, a temperature range of 20°C to 40°C is advantageous from the perspective of preventing contraction, warp, and deformation of the molded article.

It is effective to carry out crystallization by heating to further increase the heat resistance of the molded article obtained by injection molding.

Examples of crystallization methods include methods wherein injection molding is carried out in a mold whose temperature was raised previously and crystallization is carried out inside the mold, methods wherein the temperature of the mold is raised after injection molding to carry out crystallization inside the mold, or methods wherein, after releasing the injection molded article in a non-crystalline state, crystallization is carried out with hot air, vapor, hot water, a far-infrared radiation heater, an IH heater, and the like. In so doing, the injection molded article need not be immobilized; however, to prevent deformation of the molded article, it is preferred to immobilize the article with a metal mold, a resin mold, and the like. In addition, taking productivity into consideration, heating can also be carried out in a packaged state.

To carry out crystallization inside the mold, it is preferred that the interior of a heated mold be filled with molten resin, which is then held inside the mold for a given time period.

In so doing, the mold temperature is from 80°C to 130°C, and preferably from 90°C to 120°C; the cooling time is from 1 to 300 seconds, and preferably from 5 to 30 seconds. The heat resistance of the injection molded article according to the present embodiment can be further increased by carrying out crystallization inside the mold with such temperature and cooling time.

If crystallization is to be carried out after releasing the molded article from the mold, the heating temperature is preferably in the range of 60°C to 130°C, and more preferably in the range of 70°C to 90°C. If the heating temperature is lower than 60°C, there is the possibility that crystallization does not proceed in the molding process, and if it is greater than 130°C, there is the possibility that a deformation and a contraction occur during cooling of the molded article.

It is preferred that the heating time be suitably determined according to the composition and heating temperature. For instance, it is preferred that at 70°C, heating be carried out for 15 minutes to 5 hours. At 130°C, it is preferred that heating be carried out for 10 seconds to 30 minutes.

(Properties of the flame retardant injection molded article)

Both injection molded articles according to the First and Second Embodiments not only have excellent flame-retardant properties, but also combine excellent impact resistance and heat resistance. That is to say, these injection molded articles have the properties of not less than 5 kJ/m$^2$, preferably not less than 10 kJ/m$^2$ Izod impact strength according to JIS K 7110 (ASTM D256), not less than 50°C, preferably not less than 55°C deflection temperature under load according to JIS K 7191 (ASTM D648), and not less than V-2 flame retardant rating according to UL94 vertical firing test.

As both flame retardant injection molded articles according to the above-mentioned First and Second Embodiments not only have excellent flame-retardant properties, but also combine excellent impact resistance and heat resistance, they can be used as construction materials, home appliance products, office equipment, automotive parts, and other general molded articles, and, in particular, they can also be used in applications requiring heat resistance.

<u>EXAMPLES</u>

Examples will be given in the following; however, the scope of the present invention is not limited to these examples. First, the methods for evaluating the examples will be described.

(1) Flame-retardant property

A combustion test was carried out based on the procedure for vertical firing test of the UL94 safety standard by Underwriters Laboratories, with n=5, using specimens of 135 mm length $\times$ 13 mm width $\times$ 3 mm thickness.

The total time over 5 specimens of the time (t1+t2) that each specimen remains in the flame during the first and second flaming was defined as T, and those with T less than 250 seconds were deemed compliant with the V-2 specification.

(2) Impact resistance

Based on JIS K 7110, 2A test fragment (with notch, 64 mm length $\times$ 12.7 mm width $\times$ 4 mm thickness) was created, and Izod impact strength measurement was carried out at 23°C using JISL-D manufactured by Toyo Seiki Seisaku-sho, Ltd.

The impact resistance of a commercialized ABS resin was used as the criteria for the assessment of Izod impact strength, and 5 kJ/m$^2$ and above was deemed compliant.

(3) Heat resistance

Based on JIS K 7191, a specimen with 120 mm length $\times$ 11 mm width $\times$ 3 mm thickness was created, and measurement of deflection temperature under load (HDT) was carried out using S-3M manufactured by Toyoseiki. The measurement was performed under the conditions of edgewise direction and 1.80 MPa flexure stress applied on the specimen.

No occurrence of deformation during the summer was used as the criteria for the assessment of the deflection temperature under load, and 50°C and above was deemed compliant.

(4) Durability

A wet heat test was carried out under the conditions of 85°C and 80% RH, and molecular weight retention after 100 hours of the wet heat test was calculated according to the following equation: molecular weight retention (%) = (average molecular weight after wet heat test/average molecular weight before wet heat test) $\times$100

Regarding molecular weight retention, the practical criteria was 70% and above. The reason for this is the rapid progression of strength deterioration below about 70%.

The measurement of the average molecular weight was carried out according to the following method.

The measurement was performed using GPC (; Gel Permeation Chromatography, HLC-8120 manufactured by Tosoh Corporation), with solvent: chloroform; solvent concentration: 0.2 wt/vol%; volume of solution injected: 200 $\mu$l; solvent flow rate: 1.0 ml/minute; solvent temperature: 40°C; and the average molecular weight of the resin composition having lactic acid resin as the main component was calculated in equivalents of polystyrene. The average molecular weights of the polystyrene standards used in so doing were 2,000,000, 670,000, 110,000, 35,000, 10,000, 4,000, and 600.

(Example 1)

Nature Works 4032D (L-lactic acid/D-lactic acid=98.6/1.4, average molecular weight: 200,000) manufactured by Cargill Dow was used as the lactic acid resin (A), BFO13ST (aluminum hydroxide treated with epoxy silane coupling agent, average particle size: 1 $\mu$m) manufactured by Nippon Light Metal Company, Ltd., was used as the epoxy metal hydroxide (B), and Plamate PD-150 (copolymer of polylactic acid and propylene glycol/sebacic acid; polylactic acid: 50 mol%; propylene glycol: 25 mol%; sebacic acid: 25 mol%; average molecular weight: 11,000,000) manufactured by Dai Nippon Ink and Chemicals Incorporated was used as the copolymer (C) of lactic acid resin and diol/dicarboxylic acid.

After Nature Works 4032D, BFO13ST, and Plamate PD-150 were dry blended at proportions of 65:25:10 mass ratio, they were compounded at 180°C using a small-scale 40 mm$\Phi$ codirectional biaxial extrusion machine manufactured by Mitsubishi Heavy Industries Co. and turned into a pellet shape. A 200 mm length $\times$ 3 mm width $\times$ 3 mm or 4 mm thickness plate was injection molded from the obtained pellet using the injection-molding machine IS50E (screw diameter: 25 mm) manufactured by Toshiba Machine Co., Ltd.

The main molding conditions were as follows:

1) Temperature conditions: cylinder temperature (195°C), mold temperature (20°C)
2) Injection conditions: injection pressure (115 Pa), hold pressure (55 MPa)
3) Measurement conditions: screw rotation speed (65 rpm), back pressure (15 MPa)

Next, the injection molded article was let to stand inside a baking test apparatus (DKS-5S manufactured by Daiei Kagaku Seiki Mfg Co., Ltd.) and heated for 2 hours at 70°C. Thereafter, evaluation of the above mentioned combustibility, impact resistance, and heat resistance was carried out using the plate that was obtained by injection molding. The results are shown in Table 1.

(Example 2)

After Nature Works 4032D, BFO13ST, and Plamate PD-150 were dry blended in proportions of 55:25:20 mass ratio, fabrication and evaluation of the injection molded article were carried out by the same methods as in Example 1. The results are shown in Table 1.

(Example 3)

After Nature Works 4032D, BFO13ST, and Plamate PD-150 were dry blended in proportions of 45:25:30 mass ratio, fabrication and evaluation of the injection molded article were carried out by the same methods as in Example 1. The results are shown in Table 1.

(Example 4)

After Nature Works 4032D, BFO13ST and Plamate PD-150 were dry blended in proportions of 65:15:20 mass ratio, fabrication and evaluation of the injection molded article were carried out by the same methods as in Example 1. The results are shown in Table 1.

(Example 5)

After Nature Works 4032D, BFO13ST, and Plamate PD-150 were dry blended in proportions of 45:35:20 mass ratio, fabrication and evaluation of the injection molded article were carried out by the same methods as in Example 1. The results are shown in Table 1.

[Table 1]

|  |  | Example 1 | Example 2 | Example 3 | Example 4 | Example 5 |
|---|---|---|---|---|---|---|
| (A) | Nature Works 4032D | 65 | 55 | 45 | 65 | 45 |
| (B) | BF-013ST | 25 | 25 | 25 | 15 | 35 |
| (C) | Plamate PD-150 | 10 | 20 | 30 | 20 | 20 |
| flame-retardant properties (UL94V) | | V-2 | V-2 | V-2 | V-2 | V-2 |
| impact resistance (Izod strength: kJ/m$^2$) | | 8 | 11 | 23 | 16 | 7 |
| heat resistance (deflection temperature under load: °C) | | 57 | 55 | 53 | 55 | 56 |

(Comparative Example 1)

After Nature Works 4032D, BFO13ST, and Plamate PD-150 were dry blended in proportions of 70:10:20 mass ratio, fabrication and evaluation of the injection molded article were carried out by the same methods as in Example 1. The results are shown in Table 2.

(Comparative Example 2)

After Nature Works 4032D and BFO13ST were dry blended in proportions of 75:25 mass ratio, fabrication and evaluation of the injection molded article were carried out by the same methods as in Example 1. The results are shown in Table 2.

[0169]  [0168] (Comparative Example 3)

After Nature Works 4032D, BFO13ST, and Plamate PD-150 were dry blended in proportions of 70:25:5 mass ratio, fabrication and evaluation of the injection molded article were carried out by the same methods as in Example 1. The results are shown in Table 2.

(Comparative Example 4)

After Nature Works 4032D, BFO13S and Plamate PD-150 were dry blended in proportions of 25:25:50 mass ratio, fabrication and evaluation of the injection molded article were carried out by the same methods as in Example 1. The results are shown in Table 2.

(Comparative Example 5)

Stearic acid treated BF-013S (aluminum hydroxide, average particle size: 1 $\mu$m) manufactured by Nippon Light Metal Company, Ltd., was mixed as the metal hydroxide. After Nature Works 4032D, stearic acid treated BF-013S, and Plamate PD-150 were dry blended in proportions of 55:25:20 mass ratio, fabrication and evaluation of the injection molded article were carried out by the same methods as in Example 1. The results are shown in Table 2.

(Comparative Example 6)

Bionolle 3003 (poly(butylene succinate/adipate), molecular weight: 200,000) manufactured by Showa Highpolymer Co., Ltd., was mixed alternatively to copolymer of lactic acid resin and diol/dicarboxylic acid. After Nature Works 4032D, BFO13ST, and Bionolle 3003 were dry blended in proportions of 55:25:20 mass ratio, fabrication and evaluation of the injection molded article were carried out by the same methods as in Example 1. The results are shown in Table 2.

[Table 2]

|  | Comparative Examples | Ex. 1 | Ex. 2 | Ex. 3 | Ex. 4 | Ex. 5 | Ex. 6 |
|---|---|---|---|---|---|---|---|
| (A) | Nature Works 4032D | 70 | 75 | 70 | 25 | 55 | 55 |
| (B) | BF-013ST | 10 | 25 | 25 | 25 |  | 25 |
|  | stearic acid treated BF-013S |  |  |  |  | 25 |  |

(continued)

| | Comparative Examples | Ex. 1 | Ex. 2 | Ex. 3 | Ex. 4 | Ex. 5 | Ex. 6 |
|---|---|---|---|---|---|---|---|
| (C) | Plamate PD-150 | 20 | | 5 | 50 | 20 | |
| | Bionolle 3003 | | | | | | 20 |
| flame-retardant properties (UL94V) | | out-of-spec | V-2 | V-2 | V-2 | out-of-spec | out-of-spec |
| impact resistance (Izod strength: kJ/m$^2$) | | 20 | 1 | 3 | 35 | 7 | 3 |
| heat resistance (deflection temperature under load: °C) | | 56 | 63 | 60 | 46 | 55 | 55 |

(Example 6)

Stabaxol I (bis(dipropyl phenyl)carbodiimide) manufactured by Rhein Chemie was mixed as the carbodiimide compound. After Nature Works 4032D, BFO13ST, Plamate PD-150, and Stabaxol I were dry blended in proportions of 55:25:20:2 mass ratio, fabrication and evaluation of the injection molded article were carried out by the same methods as in Example 1. The results are shown in Table 3.

(Example 7)

Stabaxol P (poly carbodiimide) manufactured by Rhein Chemie was mixed as the carbodiimide compound. After Nature Works 4032D, BFO13ST, Plamate PD-150, and Stabaxol P were dry blended in proportions of 55:25:20: 5 mass ratio, fabrication and evaluation of the injection molded article were carried out by the same methods as in Example 1. The results are shown in Table 3.

[Table 3]

| | | Example 2 | Example 6 | Example 7 |
|---|---|---|---|---|
| (A) | Nature Works 4032D | 55 | 55 | 55 |
| (B) | BF-013ST | 25 | 25 | 25 |
| (C) | Plamate PD-150 | 20 | 20 | 20 |
| | Stabaxol I | | 2 | |
| | Stabaxol P | | | 5 |
| durability (molecular weight retention: %) | | 5 | 95 | 94 |

As is apparent from Table 1, the injection molded articles of Examples 1 to 5 were revealed to be excellent in all aspects of flame-retardant properties, impact resistance, and heat resistance, having flame-retardant properties of V-2 based on UL94, not less than 5 kJ/m$^2$ Izod impact strength, and not less than 50°C deflection temperature under load.

On the other hand, as is apparent from Table 2, the injection molded articles of Comparative Examples 1 and 5 had excellent impact resistance and heat resistance; however, their flame-retardant properties being outside the specification, the flame-retardant properties thereof were poor. The injection molded articles of Comparative Examples 2 and 3 had excellent flame-retardant properties and heat resistance; however, their Izod impact strength being less than 5 kJ/m$^2$, the impact resistance thereof was poor. The injection molded article of Comparative Example 4 had excellent flame-retardant properties and impact resistance; however, the deflection temperature under load being 50°C, the heat resistance thereof was poor. The injection molded article of Comparative Example 6 had excellent heat resistance; however, the flame-retardant properties being outside the specification and the Izod impact strength being less than 5 kJ/m$^2$, the flame-retardant properties and impact resistance thereof were poor. As shown in the foregoing, the injection molded articles of Comparative Examples 1 to 6 were not practicable in one or more among flame-retardant properties, impact resistance, and heat resistance.

In addition, as is apparent from Table 3, it was revealed that durability could be conferred by mixing a carbodiimide compound in the resin composition that is to form the injection molded article of the present invention.

(Example 8)

Nature Works 4032D (L-lactic acid/D-lactic acid=98.6/1.4, average molecular weight: 200,000) manufactured by Cargill Dow was used as the lactic acid resin (A), ECOFLEX F (poly(butyleneadipate/terephthalate), average molecular weight: 120,000) manufactured by BASF was used as the aromatic aliphatic polyester (D), BFO13ST (aluminum hydroxide, average particle size: 1 μm) manufactured by Nippon Light Metal, Co., Ltd., was used as the epoxy metal hydroxide (B), and DOZ (dioctylazelate, molecular weight: 413) manufactured by Taoka Chemical Co., Ltd., was used as the ester compound (E).

After Nature Works 4032D, ECOFLEX F, BF013ST, and DOZ were dry blended at proportions of 60:10:29:1 mass ratio, they were compounded at 180°C using a small-scale 40 mmΦ codirectional biaxial extrusion machine manufactured by Mitsubishi Heavy Industries Co. and turned into a pellet shape. Plates with dimensions of 200 mm length × 30 mm width × 3 mm or 4 mm thickness were injection molded from the obtained pellet using the injection-molding machine IS50E (screw diameter: 25 mm) manufactured by Toshiba Machine Co., Ltd. The main molding conditions were as follows:

1) Temperature conditions: cylinder temperature (195°C), mold temperature (20°C)
2) Injection conditions: injection pressure (115 MPa), hold pressure (55 MPa)
3) Measurement conditions: screw rotation speed (65 rpm), back pressure (15 MPa)

Next, the injection molded article was let to stand inside a baking test apparatus (DKS-5S manufactured by Daiei Kagaku Seiki Mfg Co., Ltd.) and heated for 2 hours at 70°C. Thereafter, the plate that was obtained by injection molding was cut to 135 mm length × 13 mm width × 3 mm thickness, and evaluation of the above mentioned combustibility, impact resistance, and heat resistance was carried out. The results are shown in Table 4.

(Example 9)
After Nature Works 4032D, ECOFLEX F, BF013ST, and DOZ were dry blended in proportions of 58:10:29:3 mass ratio, fabrication and evaluation of the injection molded article were carried out by the same methods as in Example 8. The results are shown in Table 4.

(Example 10)
After Nature Works 4032D, ECOFLEX F, BF013ST, and DOZ were dry blended in proportions of 56:10:29:5 mass ratio, fabrication and evaluation of the injection molded article were carried out by the same methods as in Example 8. The results are shown in Table 4.

(Example 11)
After Nature Works 4032D, ECOFLEX F, epoxy silane BF013ST, and DOZ were dry blended in proportions of 63:10:24:3 mass ratio, fabrication and evaluation of the injection molded article were carried out by the same methods as in Example 8. The results are shown in Table 4.

(Example 12)
After Nature Works 4032D, ECOFLEX F, BF013ST, and DOZ were dry blended in proportions of 53:10:34:3 mass ratio, fabrication and evaluation of the injection molded article were carried out by the same methods as in Example 8. The results are shown in Table 4.

(Example 13)
After Nature Works 4032D, ECOFLEX F, BF013ST, and DOZ were dry blended in proportions of 53:15:29:3 mass ratio, fabrication and evaluation of the injection molded article were carried out by the same methods as in Example 8. The results are shown in Table 5.

(Example 14)
Bionolle 3003 (poly(butylene succinate/adipate), average molecular weight: 200,000) manufactured by Showa Highpolymer Co., Ltd., was used as the aliphatic polyester (D). After Nature Works 4032D, Bionolle 3003, BF013ST, and DOZ were dry blended in proportions of 58:10:29:3 mass ratio, fabrication and evaluation of the injection molded article were carried out by the same methods as in Example 8. The results are shown in Table 5.

(Example 15)
D620 (polyester compound; molecular weight: approximately 800) manufactured by J-Plus Co., Ltd. as the ester compound (E), was mixed alternatively to DOZ. After Nature Works 4032D, ECOFLEX F, BF013ST, and D620 were dry blended in proportions of 58:10:29:3 mass ratio, fabrication and evaluation of the injection molded article were carried out by the same methods as in Example 8. The results are shown in Table 5.

(Example 16)
Micro Ace L1 (talc, average particle size: 4.9 μm) manufactured by Nippon Talc Co., Ltd., was mixed as the crystallization promoting agent. After Nature Works 4032D, ECOFLEX F, BF013ST, DOZ, and Micro Ace L1 were dry blended in proportions of 53:10:29:3:5 mass ratio, they were compounded at 180°C using a small-scale 40mmΦ codirectional biaxial extrusion machine manufactured by Mitsubishi Heavy Industries Co. and turned into a pellet shape. Plates with dimensions of L 200 mm × W 30 mm × t 3 mm or 4 mm were injection molded from the obtained pellet using the injection-molding machine IS50E (screw diameter: 25 mm) manufactured by Toshiba Machine Co., Ltd.

Otherwise, evaluation was carried out considering the same conditions as in Example 8 (cylinder temperature, injection pressure, hold pressure, screw rotation speed, and back pressure). The results are shown in Table 5.

[Table 4]

|  |  | Example 8 | Example 9 | Example 10 | Example 11 | Example 12 |
|---|---|---|---|---|---|---|
| (A) | Nature Works 4032D | 60 | 58 | 56 | 63 | 53 |
| (D) | ECOFLEX F | 10 | 10 | 10 | 10 | 10 |
| | Bionolle 3003 | | | | | |
| (B) | BF-013ST | 29 | 29 | 29 | 24 | 34 |
| (E) | DOZ (molecular weight: 413) | 1 | 3 | 5 | 3 | 3 |
| | D620 (molecular weight: approximately 800) | | | | | |
| | Micro Ace L1 | | | | | |
| flame-retardant properties (UL94V) | | V-2 | V-2 | V-2 | V-2 | V-2 |
| Izod impact strength (kJ/m$^2$) | | 13 | 15 | 15 | 18 | 10 |
| deflection temperature under load (°C) | | 59 | 57 | 54 | 54 | 60 |

[Table 5]

|  |  | Example 13 | Example 14 | Example 15 | Example 16 |
|---|---|---|---|---|---|
| (A) | Nature Works 4032D | 53 | 58 | 58 | 53 |
| (D) | ECOFLEX F | 15 | | 10 | 10 |
| | Bionolle 3003 | | 10 | | |
| (B) | BF-013ST | 29 | 29 | 29 | 29 |
| | stearic acid treated BF-013S | | | | |
| (E) | DOZ (molecular weight: 413) | 3 | 3 | | 3 |
| | D620 (molecular weight: approximately 800) | | | 3 | |
| | Micro Ace L1 | | | | 5 |
| flame-retardant properties (UL94V) | | V-2 | V-2 | V-2 | V-2 |
| Izod impact strength (kJ/m$^2$) | | 30 | 10 | 15 | 13 |
| deflection temperature under load (°C) | | 56 | 57 | 57 | 58 |

(Comparative Example 7)

After Nature Works 4032D, BF013ST, and DOZ were dry blended in proportions of 68:29:3 mass ratio, fabrication and evaluation of the injection molded article were carried out by the same methods as in Example 8. The results are shown in Table 6.

(Comparative Example 8)

After Nature Works 4032D, ECOFLEX F, BF013ST, and DOZ were dry blended in proportions of 38:30:29:3 mass ratio, fabrication and evaluation of the injection molded article were carried out by the same methods as in Example 8. The results are shown in Table 6.

(Comparative Example 9)

After Nature Works 4032D, ECOFLEX F, and BF013ST were dry blended in proportions of 61:10:29 mass ratio, fabrication and evaluation of the injection molded article were carried out by the same methods as in Example 8. The results are shown in Table 6.

(Comparative Example 10)

After Nature Works 4032D, ECOFLEX F, BF013ST, and DOZ were dry blended in proportions of 51:10:29:10 mass ratio, fabrication and evaluation of the injection molded article were carried out by the same methods as in Example 8. The results are shown in Table 6.

(Comparative Example 11)

After Nature Works 4032D, ECOFLEX F, BF013ST, and DOZ were dry blended in proportions of 77:10:10:3 mass ratio, fabrication and evaluation of the injection molded article were carried out by the same methods as in Example 8. The results are shown in Table 6.

(Comparative Example 12)

After Nature Works 4032D, ECOFLEX F, BF013ST, and DOZ were dry blended in proportions of 47:10:40:3 mass ratio, fabrication and evaluation of the injection molded article were carried out by the same methods as in Example 8. The results are shown in Table 6.

(Comparative Example 13)

Using D645 (polyester compound; molecular weight: approximately 2,200) manufactured by J-Plus Co., Ltd., as the ester compound, after Nature Works 4032D, ECOFLEX F, BF013ST, and D645 were dry blended in proportions of 58:10:29:3 mass ratio, fabrication and evaluation of the injection molded article were carried out by the same methods as in Example 8. The results are shown in Table 6.

[Table 6]

| | Comparative Examples | Ex. 7 | Ex. 8 | Ex.9 | Ex. 10 | Ex. 11 | Ex. 12 | Ex. 13 |
|---|---|---|---|---|---|---|---|---|
| (A) | Nature Works 4032D | 68 | 38 | 61 | 51 | 77 | 47 | 58 |
| (D) | ECOFLEX F | | 30 | 10 | 10 | 10 | 10 | 10 |
| (B) | BF-013ST | 29 | 29 | 29 | 29 | 10 | 40 | 29 |
| (E) | DOZ | 3 | 3 | | 10 | 3 | 3 | |
| | D645 | | | | | | | 3 |
| flame-retardant properties (UL94V) | | V-2 | out-of-spec | V-2 | V-2 | out-of-spec | V-2 | V-2 |
| Izod impact strength (kJ/m$^2$) | | 2 | 50 | 4 | 16 | 30 | 2 | 4 |
| deflection temperature under load (°C) | | 65 | 48 | 60 | 47 | 57 | 60 | 61 |

As is apparent from Table 4 and Table 5, all the injection molded articles of Example 8 to 16 were revealed to be excellent in all aspects of flame-retardant properties, impact resistance, and heat resistance, having flame-retardant properties of V-2 based on UL94, not less than 5 kJ/m$^2$ Izod impact strength, and not less than 50°C deflection temperature under load.

On the other hand, as is apparent from Table 6, the injection molded articles of Comparative Examples 7, 9, 12, and 13 had excellent flame-retardant properties and heat resistance; however, the Izod impact strength being less than 5 kJ/m$^2$, the impact resistance thereof was poor. The injection molded article of Comparative Example 8 had excellent Izod impact strength; however, the flame-retardant properties being outside the specification, and the deflection temperature under load being less than 50°C, the flame-retardant properties and heat resistance thereof were poor. The injection molded article of Comparative Example 10 had excellent flame-retardant properties and impact resistance; however, the deflection temperature under load being less than 50°C, the heat resistance thereof was poor. The injection molded article of Comparative Example 11 had excellent impact resistance and heat resistance; however, the flame-retardant properties being outside the specification, the flame-retardant properties thereof were poor. As shown in the foregoing, the injection molded articles of Comparative Examples 7 to 13 were not practicable in one or more among flame-retardant properties, impact resistance, and heat resistance.

**Claims**

1. A flame retardant injection molded article that is a flame retardant injection molded article formed from a resin composition comprising a lactic acid resin (A); a metal hydroxide (B) whose surface has been treated with a silane coupling agent; a resin (D) containing either an aromatic aliphatic polyester or both of an aromatic aliphatic polyester and aliphatic polyester other than lactic acid resin; and an ester compound (E) of molecular weight in the range of 200 to 2,000;
the proportion in said resin composition occupied by the component (B) being 15% to 40% in mass;
the proportion in the resin composition occupied by the component (D) being 5% to 25% in mass, and
the proportion in the resin composition occupied by the component (E) being 0.1% to 5% in mass;
the Izod impact strength being not less than 5 kJ/m$^2$ according to JIS K 7110, and the deflection temperature under load being not less than 50°C according to JIS K 7191, and the flame retardant rating being V-2 and above according to UL94 vertical firing test.

2.  The flame retardant injection molded article as recited in Claim 1,
    wherein the metal hydroxide of component (B) is aluminum hydroxide.

3.  The flame retardant injection molded article as recited in Claim 1 or 2,
    wherein the average particle size of the metal hydroxide of component (B) is between 0.1 $\mu$m and 5 $\mu$m.

4.  The flame retardant injection molded article as recited in any one of Claims 1 to 3, wherein the silane coupling agent of component (B) is an epoxy silane coupling agent.

5.  The flame retardant injection molded article as recited in Claim 1, which is a flame retardant injection molded article formed from a resin composition comprising, together with the component (A) and the component (B), a resin (D) containing an aliphatic polyester other than lactic acid resin, and an ester compound (E) of molecular weight in the range of 200 to 2,000,
    the proportion in the resin composition occupied by the component (D) being 5% to 25% in mass, and the proportion in the resin composition occupied by the component (E) being 0.1% to 5% in mass.

6.  Method for obtaining the flame retardant injection molded article as recited in any one of Claims 1 to 5, by methods wherein the temperature of the mold is raised after injection molding to accelerate crystallization inside the mold, or methods wherein after releasing the injection molded article, crystallization is accelerated with heat treatment.

Europäisches
Patentamt

European
Patent Office

Office européen
des brevets

# EUROPEAN SEARCH REPORT

**Application Number**

EP 09 15 4959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DATABASE WPI Week 200254<br>Thomson Scientific, London, GB; AN 2002-503545<br>XP002463722<br>& JP 2002 105298 A (SHIMADZU CORP)<br>10 April 2002 (2002-04-10)<br>* abstract *<br>----- | 1-6 | INV.<br>C08L67/04<br>C08K5/10<br>C08K9/06 |
| Y | EP 1 142 949 A (HUBER CORP J M [US])<br>10 October 2001 (2001-10-10)<br>* paragraph [0001]; claims; examples *<br>----- | 1-6 | |
| A | US 5 916 950 A (OBUCHI SHOJI [JP] ET AL)<br>29 June 1999 (1999-06-29)<br>* the whole document *<br>----- | 1-6 | |
| | | | **TECHNICAL FIELDS SEARCHED (IPC)**<br><br>C08L<br>C08K |

The present search report has been drawn up for all claims

| Place of search | Date of completion of the search | Examiner |
|---|---|---|
| Munich | 11 February 2010 | Frison, Céline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 2 172 520 A1**

## ANNEX TO THE EUROPEAN SEARCH REPORT
## ON EUROPEAN PATENT APPLICATION NO.

EP 09 15 4959

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2010

| Patent document cited in search report | | Publication date | Patent family member(s) | | Publication date |
|---|---|---|---|---|---|
| JP 2002105298 | A | 10-04-2002 | JP | 3716730 B2 | 16-11-2005 |
| EP 1142949 | A | 10-10-2001 | CA | 2300707 A1 | 13-09-2001 |
| | | | US | 6242511 B1 | 05-06-2001 |
| US 5916950 | A | 29-06-1999 | DE | 69722086 D1 | 26-06-2003 |
| | | | DE | 69722086 T2 | 08-04-2004 |
| | | | EP | 0821036 A1 | 28-01-1998 |

EPO FORM P0459

For more details about this annex : see Official Journal of the European Patent Office, No. 12/82

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8252823 B
- JP 2003192925 A
- JP 2003192929 A
- JP 2003213149 A
- JP 2003192921 A
- JP H1087976 B
- JP H11116784 B